# EUROPÄISCHE PATENTSCHRIFT

(11) **EP 1 188 533 B1**
(45) Veröffentlichungstag und Bekanntmachung des Hinweises auf die Patenterteilung: **27.07.2005**
(21) Anmeldenummer: 00120375.1
(22) Anmeldetag: 18.09.2000
(51) Int. Cl.: B29C 45/04, B29C 45/17

(54) **Holmlose Spritzgiessmaschine**
Tie bar-less injection moulding machine
Machine de moulage par injection sans colonnes

(43) Veröffentlichungstag der Anmeldung: 20.03.2002
(73) Patentinhaber: Engel Austria GmbH, 4311 Schwertberg (AT)
(72) Erfinder: Urbanek, Otto, 4020 Linz (AT); Kappelmüller, Werner, 4311 Schwertberg (AT)
(74) Vertreter: Hofinger, Engelbert, Dr.Dr.

(56) Entgegenhaltungen:
- WO-A-98/02291
- CH-A- 386 687
- US-A- 4 144 010

## Beschreibung

Die Erfindung bezieht sich auf eine holmlose Spritzgießmaschine mit einer feststehenden und einer bewegbaren Formaufspannplatte und mit einer Spritzeinheit zum Einbringen von Kunststoff in einen Formhohlraum, welcher durch eine mit einer Formaufspannplatte fest verbundene Formhälfte und eine von zwei auf der anderen Formaufspannplatte mittels eines parallel zur Formaufspannplatte verschwenkbaren Drehtisches gelagerten Formhälften gebildet ist.

Eine in üblicher Weise mit Holmen versehene Spritzgießmaschine würde es nicht erlauben, einen Drehtisch mit exzentrischer Achse an einer Formaufspannplatte anzuordnen, da die Holme eine Verschwenkung des Drehtisches verhindern würden. Aus der US-A-4144010 ist zwar eine exzentrische Lagerung des Drehtisches bekannt, das Ausmaß der Verschwenkung ist allerdings begrenzt. Auch holmlose Spritzgießmaschinen der eingangs definierten Art sind bisher nur in Form von Vertikalmaschinen gebaut worden. Das Motiv für den Einsatz solcher Maschinen ist die Möglichkeit, in den ausgeschwenkten Teil des horizontalen Drehtisches Teile einzulegen oder Teile daraus zu entnehmen.

Vertikal angeordnete Maschinen der eingangs genannten Art haben verschiedene Nachteile. Da der Drehtisch in Arbeitshöhe angeordnet sein muß, ist es insbesondere nicht möglich, die Spritzeinheit unterhalb des Drehtisches anzuordnen, sodaß diese mit der beweglichen Formaufspannplatte mitfahren muß, was die Konstruktion kompliziert und teuer macht. Um beim Verschwenken des Drehtisches Verletzungen zu vermeiden, muß ein weit in den Arbeitsraum reichendes Schutzgitter vorgesehen werden, sodaß die Maschine trotz ihrer vertikalen Anordnung erheblichen horizontalen Platzbedarf hat.

Durch die geschilderten Nachteile war der Einsatz von Spritzgießmaschinen der eingangs definierten Art auf Sonderanwendungen beschränkt. Die Erfindung geht von der Überlegung aus, daß diese Nachteile weitgehend durch die vertikale Anordnung der bekannten Maschinen bedingt sind, die ihrerseits eine Folge der horizontalen Anordnung des Drehtisches ist. An sich hätte die Anordnung einer Formhälfte auf einem ausschwenkbaren Drehtisch jedoch durchaus auch Vorteile, wenn dieser Drehtisch um eine horizontale Achse und die Formhälfte damit nach oben verschwenkbar ist. Die derart nach dem Öffnen der Form ausgeschwenkten Spritzteile könnten beispielsweise gekühlt werden, während der nächste Spritzzyklus bereits abläuft. Eine Bearbeitung der Spritzteile vor deren Entnahme könnte erfolgen. Die Entnahme wäre wesentlich erleichtert.

Ein Vorteil der horizontalen Anordnung der eingangs definierten Maschine ist die Möglichkeit, die Spritzeinheit in üblicher Weise durch die feststehende Formaufspannplatte münden zu lassen. Als Komplikation gegenüber der bekannten Konstruktion muß allerdings in Kauf genommen werden, daß der Drehtisch die Bewegung der verschiebbaren Formaufspannplatte mitmacht, da es sehr schwierig wäre, den an die Spritzeinheit anschließenden Heißkanal durch einen verschwenkbaren Formteil zu führen.

Die Erfindung besteht somit in der Kombination der Maßnahmen, daß die bewegbare Formaufspannplatte horizontal verschiebbar ist, daß die Spritzeinheit der feststehenden Formaufspannplatte zugeordnet ist, und daß der Drehtisch an der bewegbaren Formaufspannplatte gelagert ist.

Weitere Einzelheiten der Erfindung werden anschließend anhand der Zeichnung erläutert. In dieser ist
Fig. 1 eine schematische Seitenansicht eines Ausführungsbeispiels und
Fig. 2 ein Schnitt nach der Linie A-B in Fig. 1.

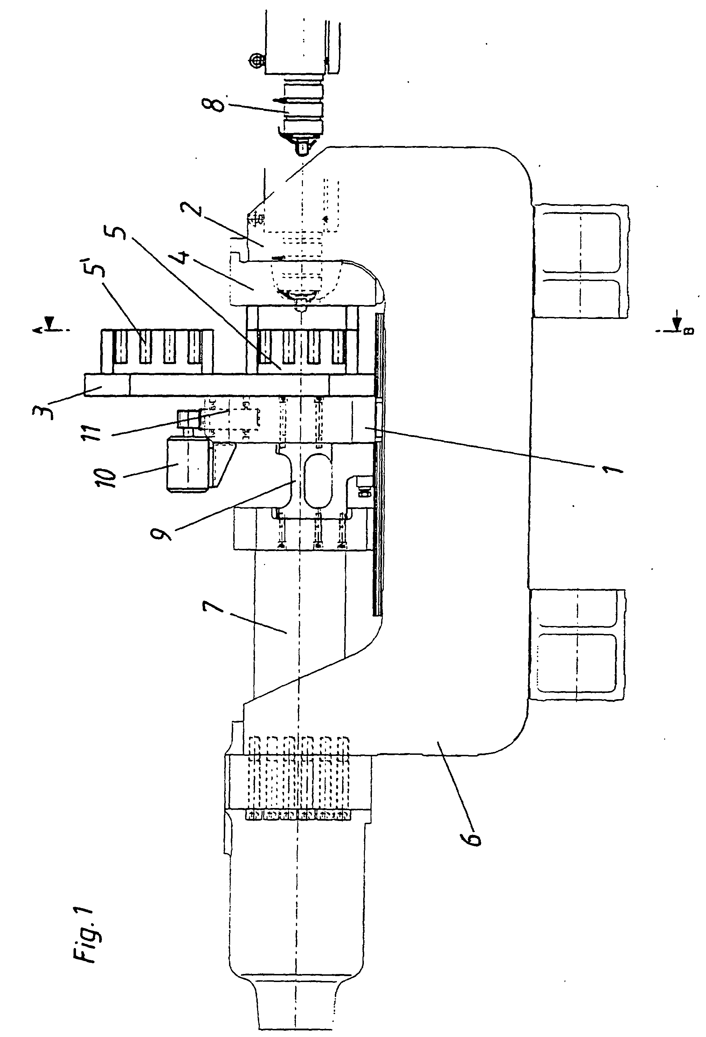

Die in Fig. 1 dargestellte Spritzgießmaschine weist einen C-Rahmen 6 auf, dessen freie Schenkel nicht durch Holme verbunden sind. Wird nun durch die Hydraulikeinheit 7 oder durch einen Servomotor der Schließdruck aufgebraucht, kommt es zu einer Aufspreizung des Rahmens 6. Diese wird durch ein Gelenk 9 kompensiert, welches es erlaubt, daß die geschlossenen Formhälften parallel zueinander geringfügig im Uhrzeigersinn kippen.

Für die Erfindung ist wesentlich, daß mit der feststehenden Formaufspannplatte 2 eine Formhälfte 4 verbunden ist, welche wahlweise mit zwei Formhälften 5, 5' zusammenwirkt. Diese sind auf einem Drehtisch 3 angeordnet, der mittels eines Motors 10 verschwenkbar ist. Die Schwenkachse 11 verläuft am oberen Rand der beweglichen Formaufspannplatte 1, sodaß die ausgeschwenkte Formhälfte 5' sich oberhalb der Maschine befindet.

Wird in üblicher Weise durch die Spritzeinheit 8 Kunststoff in den durch die Formhälften 4 und 5 gebildeten Hohlraum gespritzt, so kann bereits während des vorangehenden Dosierens des Kunststoffs in der Spritzeinheit eine Bearbeitung der im vorangegangenen Zyklus hergestellten und mit der Formhälfte 5' nach oben verschwenkten Spritzlinge erfolgen. Auf jeden Fall aber wird die Zykluszeit nicht durch deren Abkühlung verlängert, was sonst bei dickwandigen Teilen durchaus vorkommen kann.

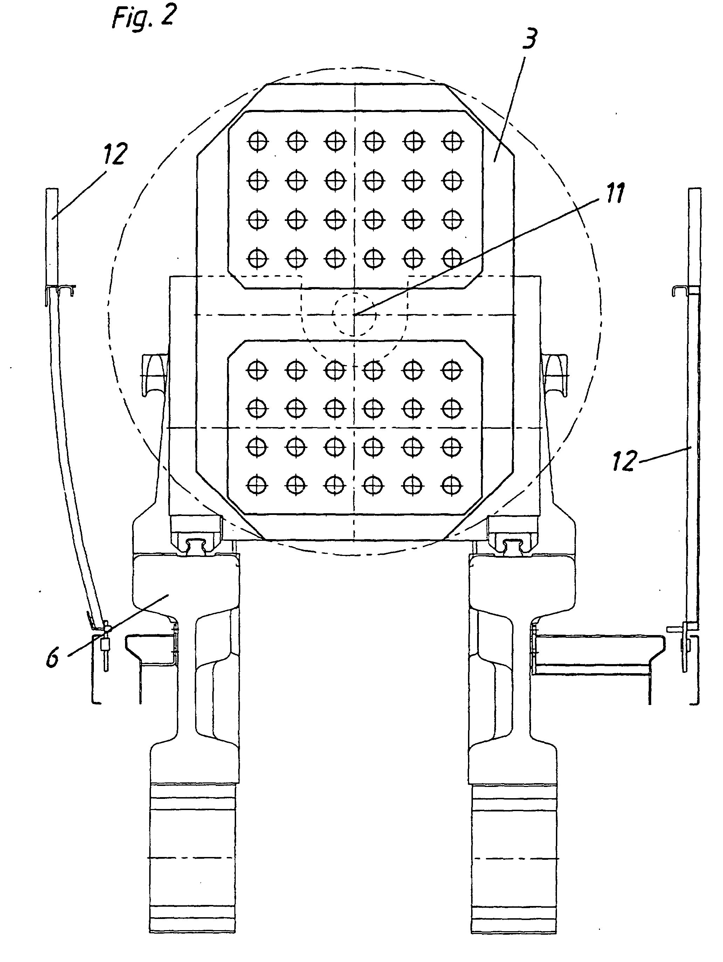

Aus Fig. 2 ist ersichtlich, daß durch das Schwenken des Drehtisches 3 um die Drehachse 11 praktisch kein zusätzlicher horizontaler Platzbedarf entsteht. Es kann daher eine Standardmaschine ohne Änderung ihrer Abmessungen, insbesondere mit gleichbleibendem Schutzgitter 12 mit dem erfindungsgemäß angeordneten Drehtisch 3 versehen werden.

## Patentansprüche

1. Spritzgießmaschine mit einer feststehenden und einer bewegbaren Formaufspannplatte und mit einer Spritzeinheit (8) zum Einbringen von Kunststoff in einen Formhohlraum, welcher durch eine mit der feststehenden Formaufspannplatte (2) fest verbundene Formhälfte (4) und eine von zwei auf der bewegbaren Formaufspannplatte (1) mittels eines parallel zur Formaufspannplatte (1) verschwenkbaren Drehtisches (3) gelagerten Formhälften (5, 5') gebildet ist, wobei die bewegbare Formaufspannplatte (1) horizontal verschiebbar, die Spritzeinheit (8) der feststehenden Formaufspannplatte (2) zugeordnet, der Drehtisch (3) an der bewegbaren Formaufspannplatte (1) an einer zum oberen Rand der bewegbaren Formaufspannplatte (1) hin in deren vertikaler Mittelebene verschobenen Achse (11) gelagert und der Antriebsmotor (10) für den Drehtisch (3) auf der bewegbaren Formaufspannplatte (1) angeordnet ist, **dadurch gekennzeichnet, daß** die Maschine zur Aufnahme des Schließdruckes einen C-Rahmen (6) aufweist, dessen freie Schenkel nicht durch Holme verbunden sind, und dass die Achse (11) des Drehtisches (3) so nahe zum oberen Rand der beweglichen Formaufspannplatte (1) verläuft, daß jede der am Drehtisch (3) gelagerten Formhälften (5,5') in den Bereich oberhalb der feststehenden Formaufspannplatte (2) verschwenkbar ist.

## Claims

1. Injection molding machine with a fixed and a movable clamping plate and with an injection unit (8) for inserting a plastic material into a mould cavity, which is built by a molding half (4) fixedly joint with said fixed clamping plate (2) and by one of two molding halves (5, 5') mounted on said movable clamping plate (1) by means of a rotary table (3) swivelable parallel to said clamping plate (1), wherein said movable damping plate (1) is horizontally relocatable, said injection unit (8) is assigned to said fixed clamping plate (2), said rotary table (3) is arranged at said movable clamping plate (1) at an axis (11) displaced to the upper edge of said movable clamping plate (1) in its vertical middle plane and the drive motor (10) for said rotary table (3) is arranged on said movable clamping plate (1), **characterized in that** the machine for absorbing the closing pressure comprises a C-frame (6), whose free limbs are not connected by bars and the axis (11) of said rotary table (3) proceeds so close to the upper edge of said movable clamping plate (1) that each of said molding halves (5, 5') arranged at said rotary table (3) is swivelable into the area above said fixed clamping plate (2).

## Revendications

1. Machine de moulage par injection avec un plateau porte-outillage fixe et un plateau porte-outillage mobile et avec une unité d'injection (8) pour introduire la matière plastique dans une empreinte, laquelle est formée par un demi moule (4) relié de manière fixe au plateau porte-outillage fixe (2) et un de deux demi-moules (5, 5') logés sur le plateau porte-outillage mobile (1) au moyen d'une table tournante (3) pouvant pivoter parallèlement au plateau porte-outillage (1), sachant que le plateau porte-outillage mobile (1) peut coulisser horizontalement, que l'unité d'injection (8) est affectée au plateau porte-outillage fixe (2), que la table tournante (3) située sur le plateau porte-outillage mobile (1) est placée sur un axe (11) déplié vers le bord supérieur du plateau porte-outillage mobile (1) à partir du plan médian vertical de celui-ci et que le moteur (10) pour la table tournante (3) est disposé sur le plateau porte-outillage mobile (1), **caractérisée en ce que** la machine pour recevoir la force de compression comporte un cadre en C (6), dont les branches libres ne sont pas reliées par des colonnes et **en ce que** l'axe (11) de la table tournante (3) passe près du bord supérieur du plateau porte-outillage mobile (1) de telle sorte que chaque demi-moule (5, 5') posé sur la table tournante (3) peut pivoter dans la zone au-dessus du plateau porte-outillage fixe (2).
